# NEUE EUROPÄISCHE PATENTSCHRIFT

(11) **EP 1 994 316 B2**
(45) Veröffentlichungstag und Bekanntmachung des Hinweises auf die Entscheidung über den Einspruch: **10.03.2021**
(45) Hinweis auf die Patenterteilung: 24.02.2010
(21) Anmeldenummer: 07721875.8
(22) Anmeldetag: 31.01.2007
(51) Int. Cl.: F16J 15/32, F16J 15/56, B62D 1/185, F16C 33/74

(54) **LAGERBUCHSENSYSTEM FÜR EINE ZWEITEILIGE LENKWELLE**
BEARING SLEEVE SYSTEM FOR A TWO-PART STEERING COLUMN
SYSTÈME DE COUSSINET POUR UN ARBRE DE DIRECTION EN DEUX PARTIES

(30) Priorität: 08.03.2006 DE 102006012057
(43) Veröffentlichungstag der Anmeldung: 26.11.2008
(73) Patentinhaber: Dittmann, Ludwig, 14163 Berlin (DE)
(72) Erfinder: Dittmann, Ludwig, 14163 Berlin (DE)
(74) Vertreter: ETL IP Patent- und Rechtsanwaltsgesellschaft mbH
(86) Internationale Anmeldenummer: PCT/DE2007/000203
(87) Internationale Veröffentlichungsnummer: WO 2007/101414

(56) Entgegenhaltungen:
- WO-A1-2006/007822
- DE-A1- 10 010 524
- DE-A1- 10 329 893
- DE-A1- 19 615 157
- DE-A1- 19 839 597
- DE-T2- 69 101 303
- FR-A- 1 357 192
- US-A- 4 261 583
- US-A- 4 934 668
- US-A1- 2005 067 242

## Beschreibung

Die Erfindung betrifft ein Lagerbuchsensystem für eine zweiteilige Lenkwelle zur axial beweglichen und abdichtenden Verbindung einer äußeren Lenkwelle mit einer inneren Lenkwelle, das eine Lagerbuchse, statische und dynamische Dichtungsmittel und eine Abdecckappe umfasst.

Eine bekannte zweiteilige Lenkwelle für Nutzfahrzeuge umfasst eine aus einem Außenrohr bestehende äußere Lenkwelle mit einer in deren freies Ende integrierten Lagerbuchse, in der eine als Innenrohr ausgebildete innere Lenkwelle axial beweglich geführt ist, um während des Fahrzeugbetriebes auftretende, sich auf die Lenkwelle übertragende Schwingungen zu kompensieren oder beim Kippen der Fahrerkabine einen Längenausgleich der Lenkwelle zuzulassen. Die Lagerbuchse soll nicht nur eine leichte und schwingungsdämpfende Gleitbewegung ermöglichen, sondern darüber hinaus nach außen eine gute Abdichtung zwischen den beiden konzentrisch angeordneten Teilen, und zwar gegenüber Spritz- und Waschwasser sowie Schmutz-, Staubund Sandpartikeln, gewährleisten.

US 4,261,583 offenbart ein Lagerbuchsensystem gemäß dem Oberbegriff des Anspruchs 1.

Zur gegenseitigen Abdichtung der beiden Lenkwellenteile wurde bereits eine Lagerbuchsenanordnung mit einem auf die außen liegende Stirnfläche der Lagerbuchse aufgesetzten Simmerring, dessen umlaufende Dichtlippe an der Oberfläche der inneren Lenkwelle anliegt, vorgeschlagen. Der Simmerring wird mit einer abgekröpften Haltehülse fixiert. Die statische Abdichtung zwischen Lagerbuchse und Lenkwelle erfolgt mit einem zwischen der Haltehülse und der Stirnfläche der äußeren Lenkwelle angeordneten O-Ring.

Die vorgeschlagene Lösung ist insofern nachteilig, als die Herstellungskosten und der Montageaufwand für die aus insgesamt vier Einzelteilen bestehende Lagerbuchse hoch sind. Zudem kann der O-Ring durch die Haltehülse zu stark zusammengepresst werden und verliert dadurch seine Elastizität und die darauf beruhende Dichtwirkung.

Der Erfindung liegt die Aufgabe zugrunde, eine Lagerbuchse für eine zweiteilige Lenkwelle zu entwickeln, die mit geringem Aufwand hergestellt und montiert werden kann und zudem eine verbesserte Gleit- und Dichtwirkung hat.

Erfindungsgemäß wird die Aufgabe mit einer gemäß den Merkmalen des Patentanspruchs 1 ausgebildeten Lagerbuchse gelöst. Vorteilhafte Weiterbildungen und zweckmäßige Ausgestaltungen der Erfindung sind Gegenstand der Unteransprüche.

Der Grundgedanke der Erfindung besteht mit anderen Worten in der formschlüssigen Verbindung der mittels eines Anschlagbundes an der äußeren Lenkwelle gehaltenen, aus einem harten Kunststoff bestehenden Lagerbuchse mit einem aus einem weichelastischen Kunststoff einstückig geformten Dichtungselement, das sowohl eine dynamische Lippendichtung gegenüber der inneren Lenkwelle als auch einen statischen Dichtungsring zur stirnseitigen Abdichtung an der äußeren Lenkwelle umfasst. Zur formschlüssigen Befestigung des Dichtungselements an der Stirnseite der Lagerbuchse ist beidseitig eine wachturmartige, ineinander greifende Rippenverzahnung ausgebildet, die auch die Vorspannkraft der Haltebuchse aufnimmt und die zudem aufgrund der Schrumpfung während des Abkühlens ineinander verkrallt ist. Der angeformte statische Dichtungsring erstreckt sich über die Höhe der Seitenfläche des Anschlagbundes und hat daher eine hohe elastische Dichtwirkung. Die derart aus zwei Kunststoffen kombinierte, ein einziges Teil bildende Lagerbuchse kann mit geringem Aufwand hergestellt und montiert werden und gewährleistet eine sichere statische und dynamische Abdichtung.

In weiterer Ausbildung der Erfindung umfasst die statische Dichtung zwei im Abstand übereinander umlaufende Dichtungslippen mit einem zwischen diesen ausgebildeten Schmiermittelreservoir. Dadurch werden sowohl die Gleiteigenschaften als auch die dynamische Abdichtung verbessert.

In Ausgestaltung der Erfindung sind an der Außenfläche der Lagerbuchse zur Versteifung Längsrippen und/oder Querrippen angeformt.

Das einstückige Dichtungselement besteht aus einem thermoplastischen Elastomer, das sich auf bzw. in den Verzahnungsrippen der vorzugsweise aus Polyamid bestehenden Lagerbuchse abstützt und so am Fließen gehindert ist. Vorzugsweise ist in das Polyamid ein Gleitmittel, beispielsweise Teflon oder Molybdändioxid, eingelagert.

Ein Ausführungsbeispiel der Erfindung, aus dem sich weitere vorteilhafte Ausgestaltungen des Lagerbuchsensystems ergeben, wird anhand der Zeichnung näher erläutert. Es zeigen:
- Fig. 1: eine perspektivische Ansicht einer auf der äuße- ren Lenkwelle angebrachten Lagerbuchsenanordnung im Schnitt;
- Fig. 2: eine vergrößerte Darstellung eines Teils des La- gerbuchsensystems;
- Fig. 3: eine Seitenansicht einer Lagerbuchse mit einem an dieser selbsthaltend angebrachten statisch und dynamisch wirkenden Dichtungselement;
- Fig. 4: eine perspektivische Darstellung des Lagerbuch- sensystems nach Fig. 3, jedoch mit teilweise weggeschnittenen dargestelltem Dichtungsele- ment; und
- Fig. 5: eine Unteransicht des Dichtungselements.

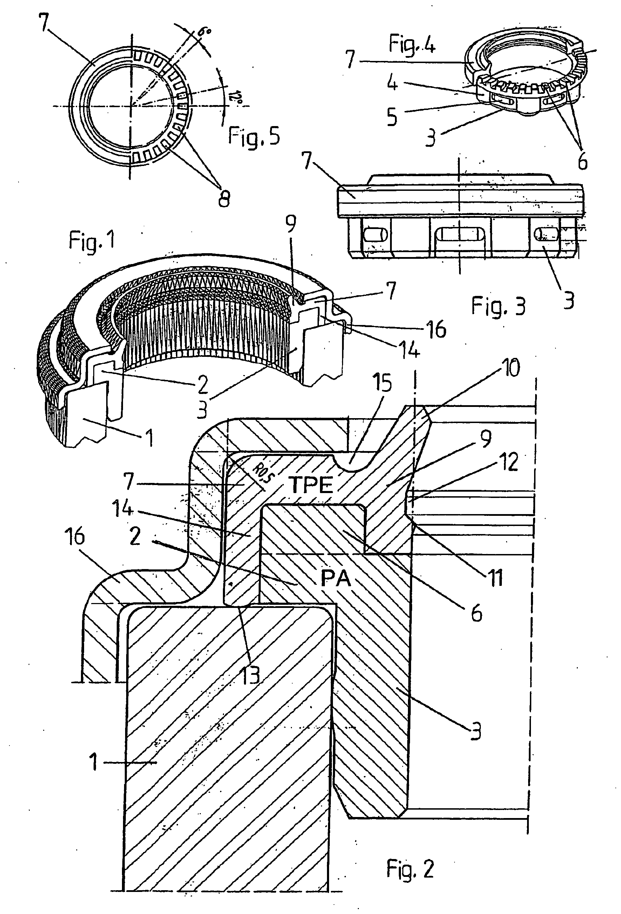

Wie in Fig. 1 und 2 dargestellt, ist im Innern einer äußeren Lenkwelle 1 eine an einem Anschlagbund 2 stirnseitig gehaltene Lagerbuchse 3 zur axial beweglichen Aufnahme einer inneren Lenkwelle (nicht dargestellt) angebracht. Die Lagerbuchse 3 besteht aus einem harten ersten Kunststoff - in der vorliegenden Ausführungsform aus Polyamid - mit einem in diesen chemisch eingelagerten Gleitmittel, beispielsweise Teflon oder Molybdändioxid. Am Außenumfang der Lagerbuchse 3 sind in regelmäßigem Abstand im Querschnitt halbkreisförmige Längsrippen 4 und/oder zwischen diesen liegende Querrippen 5 angeformt. Auf der Stirnseite des Anschlagbundes 2 und der Lagerbuchse 3 sind erste Verzahnungsrippen 6 ausgebildet. Auf der Stirnfläche der Lagerbuchse 3 ist ein auch die Seitenfläche des Anschlagbundes 2 übergreifendes Dichtungselement 7 formschlüssig befestigt, und zwar mit Hilfe von in die Räume zwischen den ersten Verzahnungsrippen 6 eingreifenden, an der Unterseite des Dichtungselements 7 angeformten zweiten Verzahnungsrippen 8.

Das Dichtungselement 7 besteht aus einem weichen zweiten Kunststoff, das heißt, einem thermoplastischen Elastomer (TPE, technischer Gummi), das beim Abkühlen auf der aus dem harten Kunststoff bestehenden Lagerbuchse schrumpft, so dass sich dessen (zweite) Verzahnungsrippen 8 in den (ersten) Verzahnungsrippen 6 der Lagerbuchse 3 verkrallen und so eine feste, innige - jedoch nicht aufgummierte klebende - Verbindung zwischen der Lagerbuchse 3 und dem Dichtungselement 7 hergestellt wird. Der auf das Dichtungselement 7 aus weichem thermoplastischem Elastomer wirkende Druck wird von der Lagerbuchse 3 und den aus hartem Polyamid bestehenden Verzahnungsrippen 6 aufgefangen. Der aufgrund der Rippenstruktur verringerte Materialanteil an thermoplastischem Elastomer bewirkt zudem eine unmittelbare Abstützung des Dichtungselements 7 und vermeidet damit dessen Neigung zum Wegfließen bei hohem Druck.

Das Dichtungselement 7 weist einen Innenschenkel 9 (Lippendichtring) mit zwei übereinander im Abstand umlaufenden Dichtungslippen, das heißt, einer ersten Dichtungslippe 10 und einer zweiten Dichtungslippe 11 mit einem zwischen diesen gebildeten Schmiermittelreservoir 12, auf. Ein umlaufender Außenschenkel liegt an der Seitenfläche des Anschlagbundes 2 an und bildet mit seiner geringfügig über die Seitenfläche des Anschlagbundes 2 ragenden, auf der Stirnfläche der äußeren Lenkwelle 1 anliegenden Ausbauchung 13 als Ganzes einen statischen Dichtungsring 14 mit entsprechend der großen Schenkellänge großem Federweg. Selbst bei sehr hohem Druck behält diese statische Dichtung ihre elastisch abdichtende Wirkung. Zur Erhöhung der Elastizität der ersten (oberen) Dichtungslippe 11 ist in das Dichtungselement 8 am Übergang zu dieser Dichtungslippe 10 eine Nut 15 eingeformt. Die Lagerbuchse 3 und das mit dieser fest verbundene Dichtungselement 7 mit den beiden erste und zweite Dichtlippen 10, 11 bildenden dynamischen Dichtungen und dem statisch wirkenden Dichtungsring 14 bilden ein einziges, aus zwei Kunststoffen fest zusammengefügtes erstes Bauteil, das mittels einem zweiten Bauteil, nämlich einer metallischen Abdeckkappe 16, auf der Stirnseite der äußeren Lenkwelle 1 fixiert wird.

Die Lagerbuchsenanordnung besteht somit aus lediglich zwei einfach zu montierenden Bauteilen mit fünf Funktionen, das heißt, Gleitlagerung, statische Abdichtung, dynamische Abdichtung einschließlich Schmierwirkung und Befestigung. Der Fertigungs- und Montageaufwand für eine derartige Lagerbuchsenanordnung ist daher gering. Zudem wird mit zwei Lippendichtungen und einem Schmierfettreservoir sowie mit einer hochelastischen statischen Dichtung, ein einstückiges Dichtungselement mit hervorragenden Dichtungseigenschaften gegenüber Druck- oder Spritzwasser, Dampf, Schmutz, Staub und Sand bereitgestellt.

Darüber hinaus sind die beiden aus Kunststoff bestehenden Bestandteile des ersten Bauteils derart formschlüssig miteinander verbunden, dass ein Wegfließen des weichen Dichtungsmaterials unter Druckeinwirkung vermieden wird.

### Bezugszeichenliste

- 1: äußere Lenkwelle
- 2: Anschlagbund
- 3: Lagerbuchse
- 4: Längsrippen
- 5: Querrippen
- 6: erste Verzahnungsrippen v. 3
- 7: Dichtungselement
- 8: zweite Verzahnungsrippen v. 7
- 9: Innenschenkel/dyn. Lippendichtung v. 7
- 10: erste Dichtungslippe
- 11: zweite Dichtungslippe
- 12: Schmiermittelreservoir
- 13: Ausbauchung
- 14: statischer Dichtungsring
- 15: Nut
- 16: Abdeckkappe

## Patentansprüche

1. Lagerbuchsensystem für eine zweiteilige Lenkwelle zur axial beweglichen und abdichtenden Verbindung einer äußeren Lenkwelle (1) mit einer inneren Lenkwelle, das eine Lagerbuchse (3), statische und dynamische Dichtungsmittel und eine Abdeckkappe (16) umfasst, **dadurch gekennzeichnet, dass** die aus einem harten Kunststoff bestehende, mit einem Anschlagbund (2) versehene Lagerbuchse (3) stirnseitig über eine formschlüssig ineinander greifende Schrumpfverzahnung (6, 8) mit einem aus weichelastischem Kunststoff bestehenden, statisch und dynamisch abdichtenden, einstückig ausgebildeten Dichtungselement (7) verbunden ist und dabei das weichelastische Material abstützt, wobei die Schrumpfverzahnung aus am Dichtungselement und an der Lagerbuchse (3) jeweils als Wachturmstruktur ausgebildeten ersten und zweiten Verzahnungsrippen (6, 8) besteht, die aufgrund einer beim Abkühlen des Kunststoffs auftretenden Schrumpfung mechanisch ineinander verkrallt sind, wobei ein zur dynamischen Abdichtung vorgesehener umlaufender Innenschenkel (9) des Dichtungselements (7) eine erste Dichtungslippe (10) aufweist und ein die Seitenfläche des Anschlagbundes (2) übergreifender umlaufender Außenschenkel des Dichtungselements (7) die äußere Lenkwelle (1) stirnseitig kontaktiert und als statischer Dichtungsring (14) fungiert.

2. Lagerbuchsensystem nach Anspruch 1, **dadurch gekennzeichnet, dass** im Abstand von der ersten umlaufenden Dichtlippe (10) eine zweite umlaufende Dichtlippe (11) ausgebildet ist, die ein Schmiermittelreservoir (12) einschließen.

3. Lagerbuchsensystem nach Anspruch 1, **dadurch gekennzeichnet, dass** am Übergang zu dem die Dichtungslippen bildenden Innenschenkel (9) in das Dichtungselement (7) eine umlaufende Nut (15)eingeformt ist.

4. Lagerbuchsensystem nach Anspruch 1, **dadurch gekennzeichnet, dass** der statische Dichtungsring (14) des Dichtungselements (7) an seiner freien Stirnseite eine über die Seitenfläche des Anschlagbundes (2) hinaus ragende, die Lenkwelle (1) kontaktierende Ausbauchung (13) aufweist.

5. Lagerbuchsensystem nach Anspruch 1, **dadurch gekennzeichnet, dass** an der Außenfläche der Lagerbuchse (1) im Querschnitt halbkreisförmige Längsrippen (4) und/oder Querrippen (5) angeformt sind.

6. Lagerbuchsensystem nach Anspruch 1, **dadurch gekennzeichnet, dass** der für die Lagerbuchse (3) verwendete Kunststoff Polyamid mit chemisch eingelagertem Gleitmittel ist.

7. Lagerbuchsensystem nach Anspruch 7, **dadurch gekennzeichnet, dass** das Gleitmittel Teflon oder Molybdandioxid ist.

8. Lagerbuchsensystem nach Anspruch 1, **dadurch gekennzeichnet, dass** der für das Dichtungselement (7) eingesetzte Kunststoff ein thermoplastisches Elastomer ist.

## Claims

1. A bearing sleeve system for a two-part steering shaft, for the axially movable and sealing connection of an outer steering shaft (1) to an inner steering shaft, said bearing sleeve system comprising a bearing sleeve (3), static and dynamic sealing means, and a covering cap (16), **characterised in that** the bearing sleeve (3), which consists of a hard plastic and is provided with a stop collar (2), is connected at the end via an interlocking shrink-fit toothing (6, 8) to a single-piece sealing element (7), which consists of soft elastic plastic and seals statically and dynamically, and supports the soft elastic material, wherein the shrink-fit toothing consists of first and second toothing ribs (6, 8) which are formed as a watchtower structure on the sealing element and on the bearing sleeve (3), respectively, and dig mechanically into each other owing to the shrinkage occurring when the plastic cools, wherein a circumferential inner flange (9), provided for dynamic sealing, of the sealing element (7) has a first sealing lip (10), and a circumferential outer flange, fitting over the side face of the stop collar (2), of the sealing element (7) makes contact with the end of the outer steering shaft (1) and acts as a static sealing ring (14).

2. The bearing sleeve system according to Claim 1, **characterised in that** a second circumferential sealing lip (11) is formed at a distance from the first circumferential sealing lip (10), and said lips enclose a lubricant reservoir (12).

3. The bearing sleeve system according to Claim 1, **characterised in that** a circumferential groove (15) is moulded into the sealing element (7) at the transition to the inner flange (9) forming the sealing lips.

4. The bearing sleeve system according to Claim 1, **characterised in that** the static sealing ring (14) of the sealing element (7) has on its free end face a bulge (13) which protrudes beyond the side face of the stop collar (2) and makes contact with the steering shaft (1) .

5. The bearing sleeve system according to Claim 1, **characterised in that** longitudinal ribs (4) and/or transverse ribs (5) of semi-circular cross-section are moulded on the outer face of the bearing sleeve (1).

6. The bearing sleeve system according to Claim 1, **characterised in that** the plastic used for the bearing sleeve (3) is polyamide with a chemically embedded sliding agent.

7. The bearing sleeve system according to Claim 7, **characterised in that** the sliding agent is Teflon or molybdenum dioxide.

8. The bearing sleeve system according to Claim 1, **characterised in that** the plastic used for the sealing element (7) is a thermoplastic elastomer.

## Revendications

1. Système de coussinet pour un arbre de direction en deux parties pour la liaison axialement mobile et étanchéifiante d'un arbre de direction extérieur (1) avec un arbre de direction intérieur, qui comprend un coussinet (3), des moyens d'étanchéité statiques et dynamiques et un couvercle (16), **caractérisé en ce que** le coussinet (3) composé d'une matière plastique dure, doté d'un collet de butée (2) est relié en face avant par une denture rétractable (6, 8) interférant par conformité de forme à un élément d'étanchéité (7) composé de matière plastique élastique souple, à étanchéification statique et dynamique, constitué en une pièce et soutient à cet effet le matériau élastique souple, sachant que la denture rétractable est composée de premières et deuxièmes cannelures de denture (6, 8) constituées respectivement comme une structure de mirador sur l'élément d'étanchéité et sur le coussinet (3), qui sont mécaniquement accrochées l'une dans l'autre en raison d'un retrait se produisant au refroidissement de la matière plastique, sachant qu'une branche intérieure (9) périphérique de l'élément d'étanchéité (7) comporte une première lèvre d'étanchéité (10) prévue pour l'étanchéification dynamique et une branche extérieure périphérique de l'élément d'étanchéité (7) venant en prise sur la face latérale du collet de butée (2) est en contact en face avant avec l'arbre de direction extérieur (1) et se comporte comme une bague d'étanchéité statique (14).

2. Système de coussinet selon la revendication 1, **caractérisé en ce qu'**à distance de la première lèvre d'étanchéité périphérique (10) est constituée une deuxième lèvre d'étanchéité périphérique (11), qui contient un réservoir de lubrifiant (12).

3. Système de coussinet selon la revendication 1, **caractérisé en ce qu'**une rainure (15) périphérique est conformé dans l'élément d'étanchéité (7) à la transition avec la branche intérieure (9) formant les lèvres d'étanchéité.

4. Système de coussinet selon la revendication 1, **caractérisé en ce que** la bague d'étanchéité statique (14) de l'élément d'étanchéité (7) comporte sur sa face avant libre un bombement (13) dépassant au-dessus de la surface latérale du collet de butée (2), en contact avec l'arbre de direction (1).

5. Système de coussinet selon la revendication 1, **caractérisé en ce que** les nervures longitudinales (4) et/ou nervures transversales (5) semi-circulaires en section sont conformées sur la surface extérieure du coussinet (1).

6. Système de coussinet selon la revendication 1, **caractérisé en ce que** la matière plastique utilisée pour le coussinet (3) est du polyamide avec un agent de glissement chimiquement incorporé.

7. Système de coussinet selon la revendication 7, **caractérisé en ce que** l'agent de glissement est du Téflon ou du dioxyde de molybdène.

8. Système de coussinet selon la revendication 1, **caractérisé en ce que** la matière plastique utilisée pour l'élément d'étanchéité (7) est un élastomère thermoplastique.
